(19) Europäisches Patentamt
European Patent Office
Office européen des brevets

(11) **EP 1 672 202 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(51) Int Cl.:
*F02D 41/00* (2006.01)    *F02D 21/08* (2006.01)
*F02M 25/07* (2006.01)

(21) Anmeldenummer: **05251626.7**

(22) Anmeldetag: **17.03.2005**

(54) **Ein Verfahren und eine Vorrichtung eines Abgasrückführsystems für einen Verbrennungsmotor**

Amethod and apparatus of an egr system for an internal combustion engine

Méthode et appareil d'un système de recirculation de gaz d'échappement pour un moteur à combustion interne

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **17.12.2004 DE 102004061453**

(43) Veröffentlichungstag der Anmeldung:
**21.06.2006 Patentblatt 2006/25**

(73) Patentinhaber: **Delphi Technologies Holding S. à.r.l.**
**4940 Bascharage (LU)**

(72) Erfinder:
• **Schreurs, Bart**
**6700 Waltzing (BE)**
• **Schmitt, Julien**
**57970 Yutz (FR)**

(74) Vertreter: **Gregory, John David Charles et al**
**Delphi Diesel Systems**
**Patent Department**
**Courteney Road**
**Gillingham**
**Kent ME8 0RU (GB)**

(56) Entgegenhaltungen:
**EP-A- 0 964 142    DE-A1- 10 153 322**
**US-A- 5 918 582**

• **PATENT ABSTRACTS OF JAPAN Bd. 2002, Nr. 09, 4. September 2002 (2002-09-04) & JP 2002 138907 A (DENSO CORP), 17. Mai 2002 (2002-05-17)**
• **PATENT ABSTRACTS OF JAPAN Bd. 1996, Nr. 02, 29. Februar 1996 (1996-02-29) & JP 07 269416 A (FUJI HEAVY IND LTD), 17. Oktober 1995 (1995-10-17)**

**Beschreibung**

Die Erfindung betrifft ein Verfahren zur Motorsteuerung sowie eine nach dem Verfahren arbeitende Vorrichtung, z.B. eine Motorelektronik in der das Verfahren implementiert ist. Konkret bezieht sich das Verfahren auf eine Regelung des Luft/Kraftstoff Gemisches (Air/Fuel Ratio = AFR) und hinsichtlich des Luftanteils auf eine Regelung des Abgasanteils in der dem Motor zugeführten Luftmasse.

Die Abgasrückführung als solche ist bekannt und wird in der Fachliteratur auch kurz mit dem Akronym EGR für "exhaust gas recirculation" bezeichnet. Die Abgasrückführung senkt in bekannter Weise die Verbrennungstemperatur, was in erwünschter Weise zu einer Reduktion des Stickstoffanteils (NOx) im Verbrennungsabgas führt.

Aus US 5 918 582 ist ein Regelsystem für einen Verbrennungsmotor in Kombination mit einem Regelsystem für Fahrzeugemissionen, mit einem EGR-Ventil in einem EGR-System, bekannt. Darin wird eine gewünschte Abgasrückführungsmenge als Funktion einer Lufteinlassflussrate und einer gewünschten EGR-Rate berechnet, die von einem Lauf des Motors abhängen, unter anderem von einer Motorgeschwindigkeit und einer Motorlast. Eine Öffnung des EGR-Ventils wird über eine Steuerungseinheit angepasst, so dass die gewünschte EGR-Menge erreicht wird. Die gewünschte EGR-Rate wird bevorzugt in Abhängigkeit von einem Einlassdruck sowie einer Motorgeschwindigkeit und einer Motorlast berechnet. Dazu ist ein Drosselventil in einem Lufteinlasskanal angeordnet, das abhängig von einer tatsächlichen Öffnung des EGR-Ventils und einem Differentialdruck zwischen einem Abgas- und einem Einlassdruck, mit welchem sich eine Flussgeschwindigkeit des zurückgeführten Abgases berechnen lässt, gesteuert wird.

Weitere verfahren oder Vorrichtungen zur Steuerung einer Abgasrückführungsmenge sind aus DE 101 53 322 A1, JP 2002 138907 A, EP 0 964 142 A2 und JP 07 269416 A bekannt.

Der Erfindung besteht darin, dass ein Verfahren zur Regelung der Abgasrückführung angegeben wird, mit dem es erstmals möglich wird, Abgas im Bereich der maximal möglichen Menge zurückzuführen. Dies bewirkt eine maximal mögliche NOx-Reduktion. Bisher ist eine Rückführung der theoretisch bekannten maximal möglichen Abgasmenge nicht möglich gewesen, weil mit der Rückführung höherer Abgasmengen als bisher üblich die Gefahr besteht, dass sich für den Motor bei dem damit sich ergebenden Luft/Kraftstoff Gemisch eine Konstellation einstellt, bei der die Verbrennung nicht mehr optimal oder vollständig oder in der vorgesehenen Art und Weise erfolgt und damit insgesamt eine suboptimale oder ggf. sogar kritische Betriebssituation vorliegt. Gemäß der Erfindung erfolgt die Abgasrückführung aufgrund einer Steuerung oder Regelung. Die Steuerung ermöglicht eine gegenüber bekannten Ausführungsformen erheblich verbesserte Rückführung von Abgasmengen. Die Verbesserung geht so weit, dass bereits mit der Steuerung grundsätzlich stets eine Abgasmenge zurückgeführt wird, die der maximal möglichen zurückführbaren Abgasmenge entspricht oder zumindest im Bereich der maximal möglichen zurückführbaren Abgasmenge liegt. Die Regelung verbessert diese Ergebnisse nochmals und ermöglicht auch eine Anpassung an veränderte Betriebszustände z.B. aufgrund von Ablagerungen und dergleichen im Bereich des die rückgeführte Abgasmenge regulierenden Ventils.

Die Regelung ermöglicht es, stets eine Abgasmenge in den Motor zurückzuführen, die der maximal möglichen zurückführbaren Abgasmenge entspricht oder zumindest im Bereich der maximal möglichen zurückführbaren Abgasmenge liegt.

Diese Aufgabe wird erfindungsgemäß mit einem Verfahren mit den Merkmalen des Anspruchs 1 gelöst. Hinsichtlich der Vorrichtung wird die Aufgabe mit einer nach dem Verfahren arbeitenden Vorrichtung gelöst, z.B. einer Motorsteuerung, in der das Verfahren elektronisch, als Software oder in einer Mischform, also teilweise elektronisch und teilweise in Software implementiert ist.

Die abhängigen Ansprüche sind auf bevorzugte Ausführungsformen der vorliegenden Erfindung sowie Einzelaspekte der Erfindung und deren bevorzugte Ausführungsformen gerichtet.

Nachfolgend wird ein Ausführungsbeispiel der Erfindung sowie weitere bevorzugte Ausführungsformen anhand der Zeichnung näher erläutert. Einander entsprechende Gegenstände oder Elemente sind in allen Figuren mit den gleichen Bezugszeichen versehen.

Darin zeigen

Fig. 1    ein schematisch vereinfachtes Blockschaltbild eines Verbrennungsmotors,

Fig. 2    ein schematisch vereinfachtes Blockschaltbild des erfindungsgemäßen Steuerungsverfahrens,

Fig. 3    ein schematisch vereinfachtes Blockschaltbild einer ersten Ausführungsform des erfindungsgemäßen Regelungsverfahrens,

Fig. 4    ein schematisch vereinfachtes Blockschaltbild einer weiteren Ausführungsform des erfindungsgemäßen Regelungsverfahrens und

Fig. 5    eine vereinfachte Darstellung eines Ventils sowie mit einem solchen Ventil assoziierte charakteristische Kennlinien.

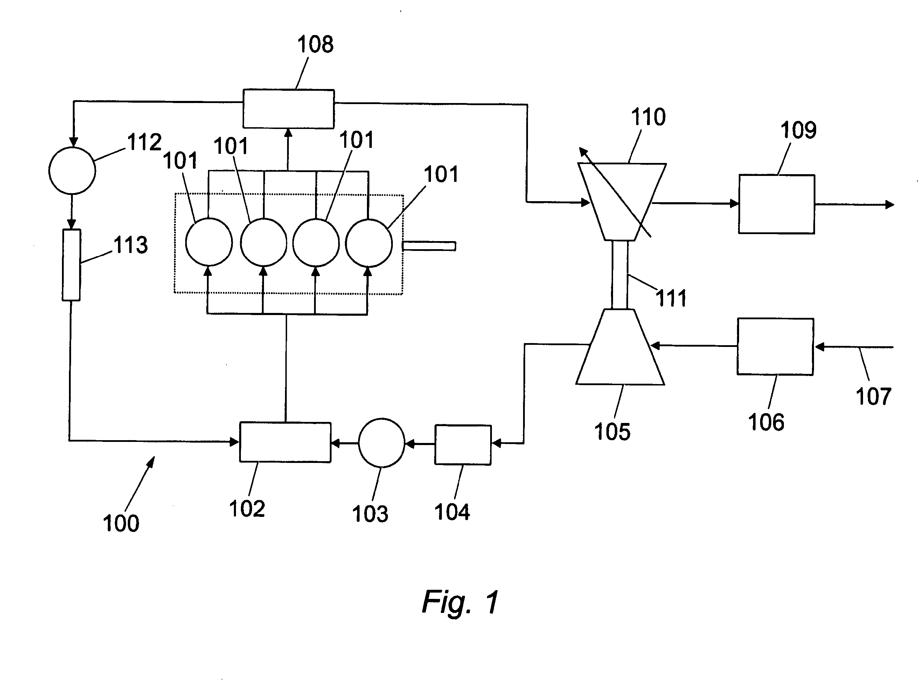

Fig. 1 zeigt ein schematisch vereinfachtes Blockschaltbild eines Verbrennungsmotors 100 am Beispiel eines Dieselmotors, wobei der Motorblock nur durch vier schematisch angedeutete Zylinder 101 dargestellt ist.

Dem Motorblock in Richtung des Massenflusses stromaufwärts vorgelagert ist ein Einlasskrümmer 102 (intake manifold), eine Drosselklappe 103 (throttle) und ein Frischluftkühler 104 (inter-cooler). Daran schließt sich ein Kompressor 105 und ein Luftfilter 106 an. Am Eingang des Luftfilters 106 befindet sich ein Frischlufteinlass 107. Entsprechend sind dem Motorblock in Richtung des Massenflusses stromabwärts nachgelagert ein Auslasskrümmer 108 (exhaust manifold) und in Richtung des Auspuffs 109 (exhaust line) noch eine Turbine, insbesondere eine Turbine mit variabler Geometrie 110 (VGT = variable geometry turbine), die vom Abgas angetrieben wird und mit dem Kompressor 105 z.B. über eine gemeinsame Welle 111 zu dessen Antrieb verbunden ist. Zur Abgasrückführung ist zumindest ein Teil des Abgases vom Auslasskrümmer 108 über ein EGR Ventil 112 (EGR = exhaust gas recirculation) und einen EGR Kühler 113 zum Einlasskrümmer 102 und damit in den Motor rückführbar.

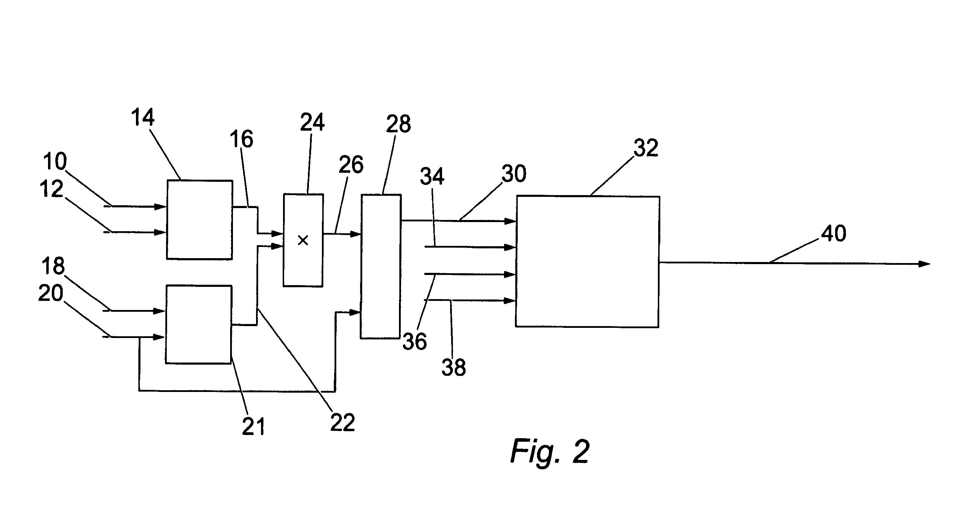

Die Erfindung schlägt nun ein Verfahren zur Regelung der Stellung des EGR Ventils 112 vor, derart, dass stets eine optimale Abgasmenge zum Motor zurückgeführt wird. Das Verfahren wird im Folgenden anhand von Fig. 2 erläutert.

Fig. 2 zeigt ein schematisch vereinfachtes Blockschaltbild des erfindungsgemäßen Steuerungsverfahrens. Mit 10 und 12 sind ein erster und ein zweiter Mess- oder Eingangswert der Regelung bezeichnet, wobei der erste Eingangswert 10 ein Maß für die Geschwindigkeit des Motors, also z.B. eine Drehzahl 10, und der zweite Eingangswert 12 ein Maß für die abgegebene Leistung, also z.B. ein Drehmoment 12, ist. Diese beiden Eingangswerte 10, 12 werden geeignet verknüpft, z.B. anhand einer Verweistabelle 14 (lookup-table), so dass sich am Ausgang der Verweistabelle 14 ein gewünschtes Abgasrückführungsverhältnis 16 ablesen lässt. Als weitere Eingangswerte 18, 20 der Regelung wird ein insbesondere als Konstante vorgegebenes oder vorgebbares minimales Luft/Kraftstoffverhältnis 18 und eine Geschwindigkeitsdichte 20 des Massenflusses (Geschwindigkeitsdichte = speed density; Einheit: [g/s]) im oder am motorseitigen Ausgang des Einlasskrümmers 102 berücksichtigt. Massenfluss meint hier Gesamtmassenfluss, also Massenfluss des durch den Einlasskrümmer 102 strömenden Gemisches aus Frischluft und zurückgeführtem Abgas. Durch geeignete mathematische Verknüpfung wird in einer Grenzwertberechnung 21 aus dem minimalen Luft/Kraftstoffverhältnis 18 und der Geschwindigkeitsdichte 20 ein maximales Abgasrückführungsverhältnis 22 errechnet.

Das gewünschte Abgasrückführungsverhältnis 16 wird in einem Begrenzer 24 ggf. auf das zuvor ermittelte maximales Abgasrückführungsverhältnis 22 begrenzt. Das gewünschte oder maximale Abgasrückführungsverhältnis 16, 22 wird im Folgenden kurz als DEGRR 16 (desired exhaust gas recirculation rate) oder MEGR 22 (max exhaust gas recirculation rate) bezeichnet. Am Ausgang des Begrenzers 24 steht damit, ggf. nach geeigneter Normierung, eine LDEGRR 26 (limited desired exhaust gas recirculation rate) als Prozentualwert zur Verfügung. In einem nachfolgenden Multiplikator 28 wird das begrenzte gewünschte Abgasrückführungsverhältnis LDEGRR 26 mit der Geschwindigkeitsdichte 20 multipliziert. Es ergibt sich der gewünschte EGR Massenstrom 30 in [g/s].

Der gewünschte EGR Massenstrom 30 wird als Eingang einem Model für das EGR Ventil 112 - EGR-Ventil Modell 32 - zugeführt, das im Wesentlichen auf den nachfolgend angegebenen Beziehungen basiert, die wiederum darauf basieren, dass ein Ventil sich als Einschnürung in einem Rohr mit je nach Öffnungszustand des Ventils unterschiedlich großer Öffnung darstellen lässt.

$$\dot{m} = \frac{C_D \cdot A_R \cdot p_0}{(R \cdot T_0)^{1/2}} \left( \frac{p_T}{P_0} \right)^{1/\gamma} \left\{ \frac{2\gamma}{\gamma - 1} \left[ 1 - \left( \frac{p_T}{P_0} \right)^{(\gamma-1)/\gamma} \right] \right\}^{1/2}$$

$$\dot{m} = \frac{C_D \cdot A_R \cdot p_0}{(R \cdot T_0)^{1/2}} \gamma^{(1/2)} \left( \frac{2}{\gamma + 1} \right)^{(\gamma+1)/2(\gamma-1)}$$

Es ist bekannt, dass strömende Flüssigkeiten im Bereich einer solchen Einschnürung unter bestimmten Umständen mit Schallgeschwindigkeit strömen. Die untere Formel bezieht sich dabei auf Verhältnisse mit Strömungsgeschwindigkeiten im Bereich der Ventilöffnung unterhalb der Schallgeschwindigkeit, wenn also gilt

$$p_T/p_0 \leq [2/(\gamma+1)]^{\gamma/(\gamma-1)}; \quad [2/(\gamma+1)]^{\gamma/(\gamma-1)} \approx 0{,}52.$$

Die obere der beiden Formeln bezieht sich auf Strömungen mit Schallgeschwindigkeit im Bereich der Ventilöffnung ("sonic flow").

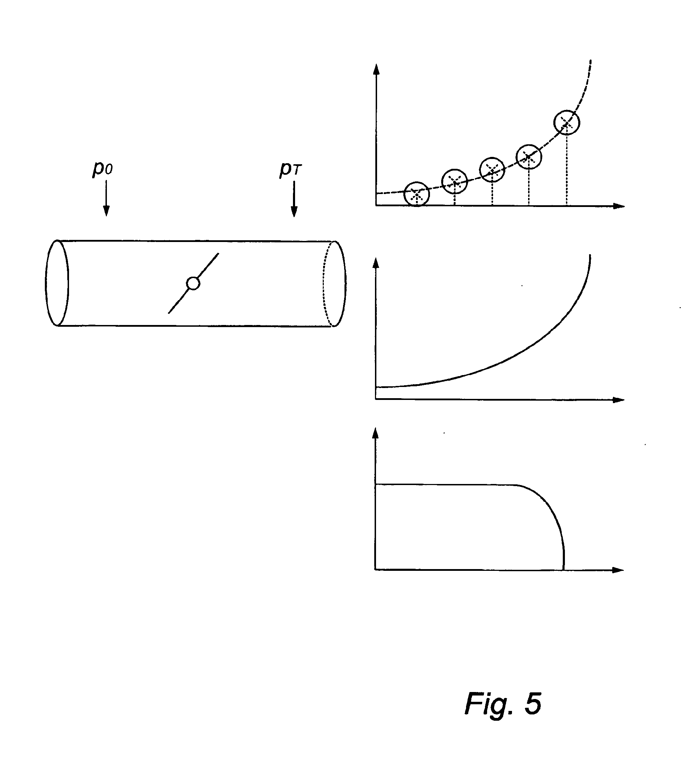

Eine schematisches Darstellung zu diesen an sich bekannten Verhältnissen ist in Fig. 5 gezeigt. Dabei ist auf der linken Seite ein einfaches Modell eines Ventils, nämlich eine drehbare Klappe in einem Rohrstück, gezeigt. Das Ventilmodell wird bei der Modellierung des EGR-Ventils 112 zugrunde gelegt. Die Klappe bildet für ein durch das Rohr strömendes Medium, also z.B. das zurückgeführte Abgas, einen Widerstand, weshalb der in Strömungsrichtung gesehen vor der Klappe (Druck $p_0$) und der Druck hinter der Klappe (Druck $p_T$) unterschiedlich sind. In Abhängigkeit vom Druckverhältnis vor und hinter der Klappe ergibt sich eine lokale Strömungsgeschwindigkeit im Bereich der Klappe, die Schallgeschwindigkeit erreichen üblicherweise aber nicht überschreiten kann. Diese Verhältnisse sind schematisch stark vereinfacht auf der rechten Seite von Fig. 5 in dem unteren der drei Koordinatensysteme gezeigt. Dabei ist auf der Abszisse das Druckverhältnis und auf der Ordinate die Strömungsgeschwindigkeit abgetragen. Man erkennt einen Bereich mit maximaler Strömungsgeschwindigkeit, in dem die Strömungsgeschwindigkeit sogar näherungsweise konstant ist. Hier liegt die Strömungsgeschwindigkeit im Bereich der Schallgeschwindigkeit (sonic area). Die dargestellte Kurve ist eine charakteristische Kennlinie für ein Ventil. Der "sonic"-Bereich der Kennlinie wird durch die untere der beiden vorstehend angegebenen Formeln beschrieben. Der nachfolgende Bereich der Kennlinie, in dem die Strömungsgeschwindigkeit nichtlinear vom Druckverhältnis abhängt und bei dem die Strömungsgeschwindigkeit unterhalb der Schallgeschwindigkeit verbleibt, lässt sich durch die obere der beiden vorstehend angegebenen Formeln beschreiben.

Die im unteren der in Fig. 5 dargestellten drei Koordinatensysteme gezeigt Kennlinie lässt sich in eine in dem mittleren Koordinatensystem gezeigte und ebenfalls schematisch stark vereinfachte Kennlinie umwandeln. Im mittleren Koordinatensystem ist auf der Abszisse eine Öffnungsposition der Klappe (des Ventils) - ausgehend von einer "geschlossen"-Position im Bereich des Ursprungs - und auf der Ordinate eine jeweils zugehörige Geschwindigkeitsdichte des Massenflusses in [g/s] abgetragen. Mit zunehmender Öffnung der Klappe steigt also der Massenfluss durch das Ventil. Im letzten, oberen Koordinatensystem ist eine Möglichkeit zur Speicherung der im mittleren Koordinatensystem gezeigten charakteristischen Kennlinie eines Ventils gezeigt. Bei einer Software-Implementation eines Ventil Modells auf Basis der oben angegebenen formelmäßigen Beziehungen ist es nämlich häufig zu aufwändig, komplexe Berechnungen, wie sie nach diesen Beziehungen durchzuführen wären, kontinuierlich durchzuführen. Demgegenüber kann es günstiger sein, die sich ergebende Kennlinie selbst sowie darüber hinaus von der Kennlinie ggf. nur einzelne Stützstellen abzuspeichern. Wenn die Anzahl der Stützstellen bei äquidistantem Abstand geeignet hoch gewählt wird, beschreibt auch die Folge der Stützstellen die charakteristische Kennlinie ausreichend genau. Die Kennlinie kann damit als Folge von Wertepaaren, nämlich Position der jeweiligen Stützstelle und Amplitude an der jeweiligen Position, abgespeichert werden. Die Abspeicherung der charakteristischen Kennlinie in Form einer Folge von Stützstellen ist günstig im Hinblick auf eine Ausführungsform der Erfindung, die sich mit einer Regelung der Abgasrückführung, genauer mit einer Optimierung der Regelung durch Anpassung der zugrunde liegenden Modellparameter befasst. Die Modellparameter sind aber bei der beschriebenen Ausführungsform genau die jeweiligen Amplitudenwerte der Stützstellen, denn die charakteristische Kennlinie wird bei der Modellierung des EGR-Ventils 112 zugrunde gelegt.

Der erste Eingang des EGR-Ventil Modells 32, der EGR Massenstrom 30 entspricht dem Term m in der Formel. Als weitere Eingangswerte des EGR-Ventil Modells 32 werden eine EGR Temperatur 34, die in der Formel als $T_0$ auftaucht, ein Druckmesswert vom Eingang des EGR Ventils 112 - EGR Eingangsdruck 36 - und ein Druckmesswert vom Ausgang des EGR Ventils 112 - EGR Ausgangsdruck 38 -, berücksichtigt, wobei der EGR Eingangsdruck 36 in der Formel als $p_0$ und der EGR Ausgangsdruck 38 in der Formel als $p_T$ auftaucht.

Jedes Ventil und damit auch das EGR Venteil 112 lässt sich mit den o.g. Formeln beschreiben. Aus den Formeln lässt sich eine charakteristische Kennlinie für das jeweilige Ventil ableiten, die unterschiedliche Öffnungszustände auf jeweils zugehörige Massenflüsse, in [g/s], abbildet. Solche Kennlinien gleichen häufig einer e-Funktion, so dass sich ergibt, dass ein nichtlinearer Zusammenhang zwischen Öffnungszustand und resultierendem Massenfluss besteht. Gemäß einer bevorzugten Ausführungsform der Erfindung wird im EGR-Ventil Modell 32 eine geeignete Darstellung einer solchen, das EGR Ventil characterisierenden Kennlinie gespeichert, z.B. in Form einer Folge von Stützstellen der Kennlinie. Für den gewünschten EGR Massenstrom 30 kann dann anhand der Kennlinie oder anhand der Stützstelle, die am nächsten am Zahlenwert des gewünschten gewünschte EGR Massenstroms 30 liegt, ein Maß für die zugehörige Position des EGR Ventils 112 ermittelt werden. Die Kennlinie oder die jeweils relevante Stützstelle, ggf. auch der Eingangswert des gewünschten Massenstroms 30 werden geeignet mit den weiteren Eingängen 34, 36, 38 skaliert. Am Ausgang des EGR-Ventil Modells 32 ergibt sich ein EGR Positionssignal 40, das zur Ansteuerung des EGR Ventils 112 verwendbar ist. Damit ist das Verfahren zur Steuerung der Position des EGR Ventils 112 abgeschlossen. Aufgrund der Berücksichtigung der erwähnten Eingangswerte 10, 12, 18, 20, 34, 36, 38 ist sichergestellt, dass der sich bei der ermittelten Stellung des EGR Ventils 112 ergebende EGR Massenstrom mit dem maximal möglichen zurückführbaren EGR Massenstrom übereinstimmt oder zumindest nah in dessen Umgebung liegt.

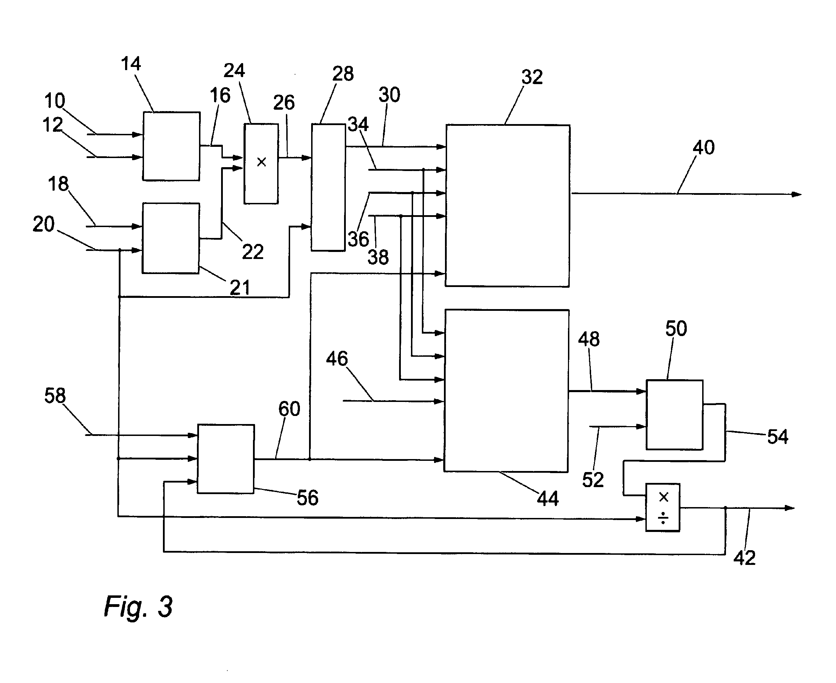

Im Folgenden wird die erfindungsgemäße Regelung der Stellung des EGR Ventils anhand von Fig. 3 beschrieben.

Fig. 3 zeigt, basierend auf dem in Fig. 2 gezeigten Blockschaltbild, ein schematisch vereinfachtes Blockschaltbild einer ersten Ausführungsform des erfindungsgemäßen Regelungsverfahrens. Das Regelungsverfahren basiert auf einer Berechnung eines "tatsächlichen" Abgasrückführungsverhältnisses 42. Dazu kann das EGR-Ventil Modell 32 herangezogen werden, das in einem zweiten EGR-Ventil Modell 44 "quasi invers" angewandt wird, wie im Folgenden erläutert wird. Das zweite EGR-Ventil Modell 44 hat mit dem EGR-Ventil Modell 32 drei Eingänge 34, 36, 38 gemeinsam. Das EGR-Ventil Modell 32 hat über diese Eingänge 34, 36, 38 hinaus den Eingang 30 für den gewünschten EGR Massenstrom 30 und den Ausgang 40 für das EGR Positionssignal 40. Der korrespondierende Ein- und Ausgang ist beim zweiten EGR-Ventil Modell 44 vertauscht. D.h. bei Zuführung eines Eingangssignals, das die aktuelle EGR Position 46 repräsentiert, liefert das zweite EGR-Ventil Modell 44 einen Ausgang, der den aktuellen EGR Massenstrom 48 repräsentiert.

Der aktuelle EGR Massenstrom 48 wird einem Filter 50 zugeführt, der zur Modellierung der Dynamik des Einlasskrümmers 102 vorgesehen ist. Die Modellierung bezieht sich auf die dynamischen Vorgänge beim Füllen des Einlasskrümmers 102 mit dem Luft/Abgasgemisch, die Vermischung der beiden Gase selbst sowie den Einfluss von Druck und/oder Temperatur auf das Befüllen und/oder Vermischen. Eine mögliche Ausführungsform eines solchen Filters ist in dem Fachartikel "Dynamic EGR Estimation für Production Engine Control" im Jahr 2001 in der Publikation zum SAE World Congress in Detroit, Michigan, US, (SAE Technical Paper 2001-01-0553) beschrieben. Neben dem aktuellen EGR Massenstrom 48 wird dem Filter 50 als weiterer Eingangswert ein Maß für das Einlasskrümmervolumen 52 zugeführt. Der Filter 50 gibt an seinem Ausgang dann einen Wert für den Einlasskrümmer EGR Massenfluss 54 aus. Der EGR Massenfluss 54 im Einlasskrümmer wird nachfolgend durch den Gesamtmassenfluss 20 im Einlasskrümmer dividiert, so dass sich das "tatsächliche" Abgasrückführungsverhältnis 42 ergibt.

Das tatsächliche Abgasrückführungsverhältnis 42 wird zusammen mit weiteren Eingängen einem insbesondere als PI-Regler ausgeführten Regler 56 zugeführt. Als weitere Eingangswerte verarbeitet der Regler 56 einen Luftmengenmesswert 58, der am Frischlufteinlass 107 aufgenommen wird, und die Geschwindigkeitsdichte des Gesamtmassenflusses 20. Der Regler 56 arbeitet auf Basis eines Fehlers, der sich aus der Differenz des aktuellen EGR Flusses und des "tatsächlichen" oder berechneten EGR Flusses, also aus der Differenz des Gesamtmassenflusses 20 und Luftmengenmesswert 58 einerseits und dem Produkt aus "tatsächlichem" oder berechnetem Abgasrückführungsverhältnisses 42 und Gesamtmassenfluss 20, ergibt. Am Ausgang des Reglers 56 ergibt sich damit ein Adaptionsfaktor 60. Der Adaptionsfaktor 60 wird sowohl dem EGR-Ventil Modell 32 als auch dem zweiten EGR-Ventil Modell 44 zu dessen Anpassung an die tatsächlichen Verhältnisse zugeführt. Der Adaptionsfaktor 60 wird für die Bildung der jeweiligen Ausgangswerte 40, 48 der EGR-Ventil Modelle 32, 44 multiplikativ oder zumindest im Wesentlichen multiplikativ verwendet. Damit ist der Regelkreis geschlossen. Die beschriebene Regelung ermöglicht einen schnellen Ausgleich evtl. Fehler bei der Modellbildung im EGR-Ventil Modell 32.

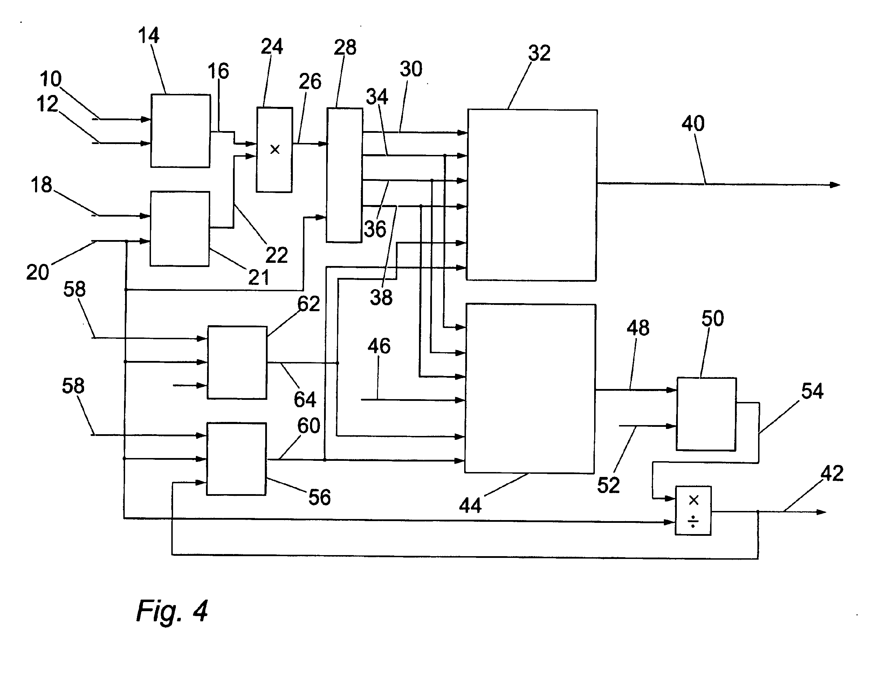

Fig. 4 zeigt ein schematisch vereinfachtes Blockschaltbild einer weiteren Ausführungsform des erfindungsgemäßen Regelungsverfahrens. Danach ist vorgesehen, dass die dem EGR-Ventil Modell 32 zugrunde liegende Kennlinie des EGR-Ventils 112 adaptiv verändert wird. Die Kennlinie oder Stützstellen der Kennlinie werden im Verlauf der Regelung immer besser an die tatsächlichen Gegebenheiten angepasst; die Kennlinie wird "gelernt". Dazu ist ein Adaptionsfunktionsblock 62 vorgesehen, der die gleichen Eingangssignale 20, 58, 42 verarbeitet wie der Regler 56. Der Adaptionsfunktionsblock 62 gibt einen Adaptionswert 64 aus, mit dem die Kennlinie des EGR Ventils 112 in den EGR Ventil Modellen 32, 44 angepasst, d.h. z.B. der Wert der jeweiligen Stützstelle geeignet skaliert werden kann. Durch die damit insgesamt bewirkte Adaption der EGR Ventil Modelle 32, 44 wird erreicht, dass der vom Regler 56 ausgegebene Adaptionsfaktor 60 üblicherweise nahe bei "1,0" liegt. Die Anforderungen an die Dynamik des Reglers 56 sind damit speziell in eingeschwungenem Zustand minimal.

Die Regelung über den Regler 56 kann damit auch als "schnelle" Regelung aufgefasst werden. Eine Besonderheit der schnellen Regelung besteht allerdings darin, dass die Regelung nicht direkt den Ausgangswert, also das EGR Positionssignal 40, beeinflusst sondern direkt die Parameter des EGR-Ventil Modells 32, ggf. beider EGR-Ventil Modelle 32, 44 beeinflusst werden und erst darüber mittelbar der eigentliche Ausgangswert, das EGR Positionssignal 40. Die zusätzliche oder alternative Regelung über den Adaptionsfunktionsblock 62 ist demgegenüber eher eine langsame Regelung, die jedoch in der Lage ist, den Regelkreis insgesamt an sich verändernde Bedingungen, z.B. Ablagerungen am EGR Ventil 112, anzupassen, so dass über die gesamte Lebensdauer des Verbrennungsmotors und seiner Komponenten und Aggregate ein optimales Ergebnis hinsichtlich der Abgasrückführung erreichbar ist. Beide Arten der Regelung können alternativ oder kombiniert verwendet werden. Auch ist die Regelung grundsätzlich unabhängig von der zugrunde liegenden Steuerungsfunktionalität. D.h. die erfindungsgemäße Regelung kann auch zur Regelung eines Steuerungszweiges mit anderem Layout als hier beschrieben verwendet werden.

Damit lässt sich die Erfindung kurz wie folgt darstellen:

Es wird ein zur Motorsteuerung bei einem Kraftfahrzeug, insbesondere Verfahren zur Steuerung eines Verbrennungsmotors - Motorsteuerung - bei einem Kraftfahrzeug, nämlich zur optimalen Einstellung einer Menge von in einem Abgasrückführungszweig von einem dem Motor ausgangsseitig nachgeordneten Auslasskrümmer 108 bis zu einem dem Motor eingangsseitig vorgeordneten Einlasskrümmer 102 zurückgeführten Abgases, sowie und eine nach dem Verfahren arbeitende Vorrichtung angegeben, das eine Steuerung und ggf. eine Regelung der zurückgeführten Abgasmenge ermöglich, wobei die Regelung bei einer bevorzugten eine Ausführungsform der Erfindung um Möglichkeiten zur Parameteradaption ergänzt ist.

Bezugszeichenliste

| | |
|---|---|
| 10 | Drehzahl |
| 12 | Drehmoment |
| 14 | Verweistabelle |
| 16 | Abgasrückführungsverhältnis |
| 18 | Luft/Kraftstoffverhältnis |
| 20 | Geschwindigkeitsdichte |
| 21 | Grenzwertberechnung |
| 22 | Abgasrückführungsverhältnis |
| 24 | Begrenzer |
| 26 | begrenztes gewünschtes Abgasrückführungsverhältnis (LDEGRR) |
| 28 | Multiplikator |
| 30 | EGR Massenstrom |
| 32 | EGR-Ventil Modell |
| 34 | EGR Temperatur |
| 36 | EGR Eingangsdruck |
| 38 | EGR Ausgangsdruck |
| 40 | EGR Positionssignal |
| 42 | Abgasrückführungsverhältnis |
| 44 | zweite EGR-Ventil Modell |
| 46 | EGR Position |
| 48 | EGR Massenstrom |
| 50 | Filter |
| 52 | Einlasskrümmervolumen |
| 54 | EGR Massenfluss |
| 56 | Regler |
| 58 | Luftmengenmesswert |
| 60 | Adaptionsfaktor |
| 62 | Adaptionsfunktionsblock |
| 64 | Adaptionswert |
| 100 | Verbrennungsmotor |
| 101 | Zylinder |
| 102 | Einlasskrümmer |
| 103 | Drosselklappe |
| 104 | Frischluftkühle |
| 105 | Kompressor |
| 106 | Luftfilter |
| 107 | Frischlufteinlass |
| 108 | Auslasskrümmer |
| 109 | Auspuff |
| 110 | Turbine mit variabler Geometrie (VGT) |
| 111 | Welle |
| 112 | EGR Ventil |
| 113 | EGR Kühler |

**Patentansprüche**

1. Verfahren zur Motorsteuerung bei einem Kraftfahrzeug, nämlich Verfahren zur Steuerung eines Verbrennungsmotors - Motorsteuerung - bei einem Kraftfahrzeug, zur optimalen Einstellung einer Menge von in einem Abgasrückführungszweig von einem dem Motor ausgangsseitig nachgeordneten Auslasskrümmer (108) bis zu einem dem Motor eingangsseitig vorgeordneten Einlasskrümmer (102) zurückgeführten Abgases,
wobei zur optimalen Einstellung der Menge zurückgeführten Abgases eine Stellung eines im Abgasrückführungszweig angeordneten Ventils - EGR Ventil (112) - gesteuert wird,
wobei die Steuerung auf einem Sollwert - gewünschtes Abgasrückführungsverhältnis (16) - basiert, der sich aus einem Maß für die Geschwindigkeit des Motors, insbesondere einer Drehzahl (10) des Motors, und aus einem Maß für die vom Motor abgegebene Leistung, insbesondere einem Drehmoment 12, errechnet und
wobei das als Sollwert fungierende gewünschte Abgasrückführungsverhältnis (16) in einem Begrenzer (24) erforderlichenfalls auf ein maximales Abgasrückführungsverhältnis (22) begrenzt wird, das sich mittels einer Grenzwertberechnung (21) aus einem vorgegebenen oder vorgebbaren minimalen Luft/Kraftstoffverhältnis (18) und einer Geschwindigkeitsdichte (20) des Gesamtmassenflusses durch den Einlasskrümmer (102) ergibt.

**2.** Verfahren nach Anspruch 1,
wobei sich eine gewünschte zurückgeführte Abgasmenge - gewünschter EGR Massenstrom (30) - aus einem am Ausgang eines Begrenzers (24), mit dem das gewünschte Abgasrückführungsverhältnis (16) ggf. auf das maximale Abgasrückführungsverhältnis (22) begrenzt wird, zur Verfügung stehenden begrenzte gewünschte Abgasrückführungsverhältnis - LDEGRR (26) - und der Geschwindigkeitsdichte (20) des Gesamtmassenflusses durch den Einlasskrümmer (102) insbesondere durch Multiplikation in einem Multiplikator (28) ergibt.

**3.** Verfahren nach Anspruch 2,
wobei der gewünschte EGR Massenstrom (30) einen Eingang eines Modells des EGR-Ventils (112) - EGR-Ventil Modell (32) - bildet und
wobei anhand des EGR-Ventil Modells (32) aus dem gewünschten EGR Massenstrom (30), insbesondere aus dem gewünschten EGR Massenstrom (30) und einem oder mehreren weiteren Eingangswert (34, 36, 38), ein EGR Positionssignal (40) zur Ansteuerung des EGR Ventils (112) oder zur Ansteuerung eines Stellgliedes, das seinerseits das EGR Ventil (112) ansteuert oder verstellt, ermittelt wird.

**4.** Verfahren nach einem oder mehreren der vorangehenden Ansprüche, wobei die Steuerung zu einer Regelung ergänzt wird, indem ein tatsächliches Abgasrückführungsverhältnis (42) berechnet, insbesondere aufgrund von Modellen (44, 50) berechnet wird und
wobei das tatsächliche Abgasrückführungsverhältnis (42) über einen Regler (56) zur Anpassung des EGR-Ventil Modells (32) zurückgeführt wird.

**5.** Verfahren nach Anspruch 4,
wobei die Berechnung des tatsächlichen Abgasrückführungsverhältnisses (42) mittels eines Filters (50), der zur Modellierung der Dynamik des Einlasskrümmers (102) vorgesehen ist, und mittels eines zweiten EGR-Ventil Modells (44) erfolgt und
wobei das tatsächliche Abgasrückführungsverhältnis (42) über den Regler (56) auch dem zweiten EGR-Ventil Modell (44) zu dessen Anpassung zurückgeführt wird.

**6.** Verfahren nach Anspruch 5,
wobei das zweite EGR-Ventil Modell (44) dem EGR-Ventil Modell (32) entspricht und
wobei das zweite EGR-Ventil Modell (44) im Vergleich zum EGR-Ventil Modell (32) invers angewandt wird.

**7.** Verfahren nach Anspruch 5 oder 6,
wobei dem Filter (50) neben einem aktuellen EGR Massenstrom (48) als Ausgang des zweiten EGR-Ventil Modells (44) als Eingangswert ein Maß für das Volumen des Einlasskrümmers (102) - Einlasskrümmervolumen (52) - zugeführt wird.

**8.** Verfahren nach einem oder mehreren der Ansprüche 5 bis 7,
wobei dem Regler (56) neben dem tatsächlichen Abgasrückführungsverhältnis (42) auch noch die Geschwindigkeitsdichte (20) des Gesamtmassenflusses durch den Einlasskrümmer (102) sowie ein an einem Frischlufteinlass (107) des Motors aufgenommener Luftmengenmesswert (58) zugeführt werden.

**9.** Verfahren nach Anspruch 8,
wobei einem parallel zum Regler (56) angeordneten Adaptionsfunktionsblock (62) das tatsächliche Abgasrückführungsverhältnis (42) sowie insbesondere auch noch die Geschwindigkeitsdichte (20) des Gesamtmassenflusses durch den Einlasskrümmer (102) sowie der Luftmengenmesswert (58) zugeführt werden und
wobei der Adaptionsfunktionsblock (62) anhand dieser Eingangswerte einen Adaptionswert (64) ausgibt, mit dem eine den EGR Ventil Modellen (32, 44) zugrunde liegende Kennlinie des EGR Ventils 112 angepasst wird.

**10.** Vorrichtung zur Steuerung eines Verbrennungsmotors - Motorsteuerung - bei einem Kraftfahrzeug, nämlich zur optimalen Einstellung einer Menge von in einem Abgasrückführungszweig von einem dem Motor ausgangsseitig nachgeordneten Auslasskrümmer (108) bis zu einem dem Motor eingangsseitig vorgeordneten Einlasskrümmer (102) zurückgeführten Abgases,

**dadurch gekennzeichnet, dass**

die Vorrichtung nach einem Verfahren gemäß einem oder mehreren der vorangehenden Ansprüche arbeitet und/ oder dass die Vorrichtung eine Implementation des Verfahrens gemäß einem oder mehreren der vorangehenden Ansprüche umfasst.

**Claims**

1. Process for engine control in a motor vehicle, namely process for control of an internal combustion engine - engine control - in a motor vehicle, for optimum adjustment of a quantity of exhaust gas recirculated in an exhaust gas recirculation branch from an exhaust manifold (108) arranged downstream of the engine on the output side to an intake manifold (102) arranged upstream of the engine on the input side, wherein for optimum adjustment of the quantity of recirculated exhaust gas, a position of a valve arranged in the exhaust gas recirculation branch - EGR valve (112) - is controlled, wherein the control is based on a theoretical value - required exhaust gas recirculation ratio (16) - which is calculated from a measure of the speed of the engine, in particular a rotational speed (10) of the engine, and from a measure of the power released by the engine, in particular a torque 12, and wherein the required exhaust gas recirculation ratio (16) acting as the theoretical value is limited in a limiter (24) if necessary to a maximum exhaust gas recirculation ratio (22), which is produced by means of a limiting value calculation (21) from a preset or presettable minimum air/fuel ratio (18) and a speed density (20) of the total mass flow through the intake manifold (102).

2. Process according to claim 1, wherein a required recirculated quantity of exhaust gas - required EGR mass flow (30) - is produced from a limited required exhaust gas recirculation ratio - LDEGRR (26) - available at the output of a limiter (24), with which the required exhaust gas recirculation ratio (16) is limited optionally to the maximum exhaust gas recirculation ratio (22), and the speed density (20) of the total mass flow through the intake manifold (102), in particular by multiplication in a multiplier (28).

3. Process according to claim 2, wherein the required EGR mass flow (30) forms an input of a model of the EGR valve (112) - EGR valve model (32) - and wherein an EGR position signal (40) for driving the EGR valve (112) or for driving an actuator, which in turn drives or adjusts the EGR valve (112), is determined using the EGR valve model (32) from the required EGR mass flow (30), in particular from the required EGR mass flow (30) and one or more further input value (34, 36, 38).

4. Process according to one or more of the preceding claims, wherein the control is supplemented to form regulation, in that an actual exhaust gas recirculation ratio (42) is calculated, in particular is calculated on the basis of models (44, 50), and wherein the actual exhaust gas recirculation ratio (42) is returned via a regulator (56) for adaptation of the EGR valve model (32).

5. Process according to claim 4, wherein the calculation of the actual exhaust gas recirculation ratio (42) is effected by means of a filter (50), which is provided for modelling the dynamics of the intake manifold (102), and by means of a second EGR valve model (44) and wherein the actual exhaust gas recirculation ratio (42) is returned via the regulator (56) also to the second EGR valve model (44) for adaptation thereof.

6. Process according to claim 5, wherein the second EGR valve model (44) corresponds to the EGR valve model (32) and wherein the second EGR valve model (44) is applied inversely in comparison with the EGR valve model (32).

7. Process according to claim 5 or 6, wherein a measure of the volume of the intake manifold (102) - intake manifold volume (52) - as an input value is passed to the filter (50) in addition to a current EGR mass flow (48) as an output of the second EGR valve model (44).

8. Process according to one or more of claims 5 to 7, wherein also the speed density (20) of the total mass flow through the intake manifold (102) and an air quantity measured value (58) recorded at a fresh air inlet (107) of the engine are passed to the regulator (56) in addition to the actual exhaust gas recirculation ratio (42).

9. Process according to claim 8, wherein the actual exhaust gas recirculation ratio (42) and in particular also the speed density (20) of the total mass flow through the intake manifold (102) and the air quantity measured value (58) are passed to an adaptation function block (62) arranged parallel to the regulator (56), and wherein the adaptation function block (62) using these input values emits an adaptation value (64), with which a characteristic of the EGR valve 112 which is the basis of the EGR valve models (32, 44) is adapted.

**10.** Device for control of an internal combustion engine - engine control - in a motor vehicle, namely for optimum adjustment of a quantity of exhaust gas recirculated in an exhaust gas recirculation branch from an exhaust manifold (108) arranged downstream of the engine on the output side to an intake manifold (102) arranged upstream of the engine on the input side, **characterised in that** the device operates in accordance with a process according to one or more of the preceding claims and/or **in that** the device comprises an implementation of the process according to one or more of the preceding claims.

## Revendications

**1.** Procédé pour la commande du moteur dans un véhicule automobile, à savoir procédé pour la commande d'un moteur à combustion, dite commande moteur, dans un véhicule automobile, pour le réglage optimal d'une quantité de gaz d'échappement recyclée dans une ramification de recyclage de gaz échappement depuis un collecteur d'échappement (108) agencé du côté sortie à la suite du moteur jusqu'à un collecteur d'admission (102) agencé du côté entrée avant le moteur,

dans lequel pour le réglage optimal de la quantité des gaz d'échappement recyclée, on commande une position d'une soupape agencée dans la ramification de recyclage de gaz d'échappement, dite soupape RGE (112),

dans lequel la commande est basée sur une valeur de consigne, c'est-à-dire un rapport de recyclage de gaz d'échappement souhaité (16), qui est calculé à partir d'une valeur pour la vitesse du moteur, en particulier d'une vitesse de rotation (10) du moteur, et à partir d'une valeur pour la puissance fournie par le moteur, en particulier d'un couple de rotation (12), et

dans lequel le rapport de recyclage de gaz d'échappement souhaité (16) faisant office de valeur de consigne est si nécessaire limité à un rapport maximum de recyclage de gaz d'échappement (22) qui résulte, au moyen d'un calcul de valeur limite (21), à partir d'un rapport minimum prédéterminé ou prédéterminable air/carburant (18) et d'une densité de vitesse (20) du débit massique total à travers le collecteur d'admission (108).

**2.** Procédé selon la revendication 1,

dans lequel une quantité de gaz d'échappement recyclée souhaitée, c'est-à-dire un courant massique RGE souhaité (30) résulte, en particulier par multiplication dans un multiplicateur (28) du rapport de recyclage de gaz d'échappement souhaité limité, dit LDEGRR (26), disponible à la sortie d'un limiteur (24), au moyen duquel le rapport de recyclage de gaz d'échappement souhaité (16) est limité le cas échéant au rapport maximum de recyclage de gaz échappement (22), et de la densité de vitesse (20) du débit massique total à travers le collecteur d'admission (102).

**3.** Procédé selon la revendication 2,

dans lequel le débit massique RGE souhaité (30) forme une entrée d'un modèle de soupape RGE (112), dit modèle de soupape RGE (32), et

dans lequel à l'aide du modèle de soupape RGE (32), on détermine à partir du débit massique RGE souhaité (30), en particulier à partir du débit massique RGE souhaité (30) et d'une ou plusieurs autres valeurs d'entrée (34, 36, 38), un signal de position RGE (40) pour le pilotage de la soupape RGE (112) ou pour le pilotage d'un organe de positionnement qui pilote ou qui règle à son tour la soupape RGE (112).

**4.** Procédé selon l'une ou plusieurs des revendications précédentes,

dans lequel la commande est complétée pour former une régulation, en ce que l'on calcule un rapport réel de recyclage de gaz d'échappement (42), en particulier en ce qu'on le calcule en se basant sur des modèles (44, 50), et

dans lequel le rapport réel de recyclage de gaz d'échappement (42) est recyclé via un régulateur (56) pour ajuster le modèle de soupape RGE (32).

**5.** Procédé selon la revendication 4,

dans lequel le calcul du rapport réel de recyclage de gaz d'échappement (42) a lieu au moyen d'un filtre (50), qui est prévu pour modéliser la dynamique du collecteur d'admission (102), et au moyen d'un second modèle de soupape RGE (44), et

dans lequel le rapport réel de recyclage de gaz échappement (42) est recyclé via le régulateur (56) également vers le second modèle de soupape RGE (44) pour son ajustement.

**6.** Procédé selon la revendication 5,
dans lequel le second modèle de soupape RGE (44) correspond au modèle de soupape RGE, et
dans lequel le second modèle de soupape RGE (44) est appliqué de façon inverse par comparaison au modèle de soupape RGE (32).

**7.** Procédé selon la revendication 5 ou 6,
dans lequel une valeur pour le volume du collecteur d'admission (102), dit volume de collecteur d'admission (52), est ramené au filtre (50) à titre de valeur d'entrée, outre un débit massique actuel RGE (48) à titre de sortie du second modèle de soupape RGE (44).

**8.** Procédé selon l'une ou plusieurs des revendications 5 à 7,
dans lequel on amène au régulateur (56), outre le rapport réel de recyclage de gaz échappement (42), également la densité de vitesse (20) du débit massique total à travers le collecteur d'admission (102), ainsi qu'une valeur de mesure de quantité d'air (58) prise au niveau d'une admission d'air frais (107) du moteur.

**9.** Procédé selon la revendication 8,
dans lequel le rapport réel de recyclage de gaz d'échappement (42) ainsi qu'en particulier également la densité de vitesse (20) du débit massique total à travers le collecteur d'admission (102) ainsi que la valeur de mesure de quantité d'air (58) sont amenés à un bloc fonctionnel d'adaptation (66) agencé en parallèle au régulateur (56), et
dans lequel le bloc fonctionnel d'adaptation (62) délivre à l'aide de ses valeurs d'entrée une valeur d'adaptation (64) au moyen de laquelle une courbe caractéristique, de la soupape RGE (112), qui constitue la base des modèles de soupape RGE (32, 44), est ajustée.

**10.** Dispositif pour la commande d'un moteur à combustion, dit commande moteur, dans un véhicule automobile, à savoir pour le réglage optimal d'une quantité de gaz d'échappement recyclée dans une ramification de recyclage de gaz d'échappement depuis un collecteur d'échappement (108) agencé du côté sortie à la suite du moteur jusqu'à un collecteur d'admission (102) agencé du côté entrée avant le moteur,
**caractérisé en ce que** le dispositif fonctionne d'après un procédé selon l'une ou plusieurs des revendications précédentes, et/ou dans ce que le dispositif comprend une mise en oeuvre du procédé selon l'une ou plusieurs des revendications précédentes.

Fig. 1

Fig. 2

Fig. 3

EP 1 672 202 B1

13

Fig. 4

$p_0$  $p_T$

Fig. 5

**EP 1 672 202 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5918582 A
- DE 10153322 A1
- JP 2002138907 A
- EP 0964142 A2
- JP 7269416 A